(19)

**Europäisches Patentamt**
**European Patent Office**
**Office européen des brevets**

(11)   **EP 4 730 264 A1**

(12)   **EUROPEAN PATENT APPLICATION**

(43) Date of publication:
**22.04.2026  Bulletin 2026/17**

(21) Application number: **24306763.4**

(22) Date of filing: **21.10.2024**

(51) International Patent Classification (IPC):
**G06T 9/00** *(2006.01)*     **H04N 19/90** *(2014.01)*

(52) Cooperative Patent Classification (CPC):
**G06T 9/002; H04N 19/90**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **SCHNITZLER, Francois**
**56890 SAINT AVE (FR)**

• **GALPIN, Franck**
**35235 THORIGNE-FOUILLARD (FR)**
• **LAMBERT, Anne**
**35250 SAINT-AUBIN-D'AUBIGNE (FR)**
• **DAMODARAN, Bharath Bhushan**
**56000 VANNES (FR)**
• **LE MEUR, Olivier**
**35160 TALENSAC (FR)**

(74) Representative: **Vossius & Partner**
**Patentanwälte Rechtsanwälte mbB**
**Siebertstraße 3**
**81675 München (DE)**

(54)   **DICTIONARY LEARNING FOR IMPLICIT NEURAL COMPRESSION**

(57)   Systems, methods, and instrumentalities are disclosed herein for dictionary learning for implicit neural compression (INR). In examples, a video decoder may decode an implicit neural representation (INR) parameter. An INR may be reconstructed based on the INR parameter. The decoder may compute a dictionary based on the reconstructed INR. A dictionary-based INR may be generated based on the computed dictionary. Data may be reconstructed based on the dictionary-based INR. in examples, the decoder may decoder a training procedure used for the computation of the dictionary. The dictionary may be computed based (e.g., further based) on the training procedure. In examples, a video encoder may determine an INR parameter. The dictionary may be computed based on the INR parameter. The encoder may determine a dictionary-based INR parameter based on the computed dictionary. The INR parameter and the dictionary-based INR parameter may be encoded.

610 input signal

| 620 | Partition signal |
|---|---|

| 630 | For each part: learn one INR | | 640 | Obtain dictionary |
|---|---|---|---|---|

| 650 | Compute INR coefficients |
|---|---|

| 660 | Encode dictionary, partition and parameters for all INRs |
|---|---|

670 bitstream

**FIG. 6**

EP 4 730 264 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed herein for dictionary learning for implicit neural compression (INR).

In examples, a video decoder may decode an implicit neural representation (INR) parameter. An INR may be reconstructed based on the INR parameter. The decoder may compute a dictionary based on the reconstructed INR. A dictionary-based INR may be generated based on the computed dictionary. Data may be reconstructed based on the dictionary-based INR. In examples, the decoder may decode a training procedure used for the computation of the dictionary. The dictionary may be computed based (e.g., further based) on the training procedure.

In examples, the decoder may obtain a first segment and a second segment. The INR parameter and the dictionary may be associated with the first segment. The decoder may decode a dictionary-based INR parameter. The dictionary-based INR parameter may be associated with the second segment and the dictionary-based INR may be generated based (e.g., further based) on the dictionary-based INR parameter.

In examples, the INR parameter may be a first INR parameter. A second INR parameter may be decoded. The second INR parameter may be associated with the first segment. The INR may be reconstructed based (e.g., further based) on the second INR parameter. In examples, the dictionary-based INR parameter may be a first dictionary-based INR parameter. A second dictionary-based INR parameter may be decoded. The second dictionary-based INR parameter may be associated with the second segment. The dictionary-based INR may be generated based (e.g., further based) on the second dictionary-based INR parameter.

In examples, the reconstructed INR may be a first reconstructed INR. The decoder may decode a partition for the first segment. The first segment may be partitioned into a first part and a second part using the decoded partition. The first reconstructed INR may be associated with the first part of the first segment. Based on the INR parameter, a second INR may be reconstructed. The second INR may be associated with the second part of the first segment. The dictionary may be computed based on (e.g., further based on) the reconstructed second INR. In examples, the dictionary-based INR may be a first dictionary-based INR. The decoder may decode a partition for the second segment. The second segment may be partitioned into a first part and a second part using the decoded partition. The first dictionary-based INR may be associated with the first part of the second segment. Based on the dictionary-based INR parameter, a second dictionary-based INR may be generated. The second dictionary-based INR may be associated with the second part of the second segment. Data may be reconstructed based on (e.g., further based on) the second dictionary-based INR.

In examples, a video encoder may determine an INR parameter. The dictionary may be computed based on the INR parameter (e.g., based on an INR associated with the INR parameter). The encoder may determine a dictionary-based INR parameter based on the computed dictionary. The INR parameter and the dictionary-based INR parameter may be encoded.

In examples, the encoder may obtain a first segment and a second segment. The INR parameter and the dictionary may be associated with the first segment. The dictionary-based INR parameter may be associated with the second segment. An INR associated with the first segment may be learned based on a loss function. A dictionary-based INR associated with the second segment may be learned based on the loss function. The INR parameter associated with the first segment may be based on the learned INR. The dictionary-based INR parameter associated with the second segment may be determined based on (e.g., further based on) the learned dictionary-based INR. The second segment may be encoded based on the dictionary-based INR.

In examples, the INR parameter may be a first INR parameter. The dictionary-based INR parameter may be a first dictionary-based INR parameter. A second parameter associated with the first segment may be determined. The dictionary may be computed based on (e.g., further based on) the second INR parameter. A second dictionary-based INR parameter associated with the second segment may be determined. The second INR parameter and the second dictionary-based INR parameter may be encoded.

In examples, the INR parameter may be a first INR parameter. The first segment may be partitioned into a first part and a second part. The first INR parameter may be associated with the first part of the first segment. A second INR parameter may be determined. The second INR parameter may be associated with the second part of the first segment. The dictionary may be computed based on (e.g., further based on) the second INR parameter.

In examples, the dictionary-based INR parameter may be a first dictionary-based INR parameter. A partition may be selected for the second segment. The partition may be selected based on the computed dictionary. The second segment may be partitioned into a first part and a second part. The first dictionary-based INR parameter may be associated with the first part of the second segment. A second dictionary-based INR parameter may be determined. The second dictionary-based INR parameter may be associated with the second part of the second segment.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of a sample neural network which can be used for implicit neural representations (INR).
FIGs. 5-6 show example processes to encode a signal using an INR.
FIG. 7 shows an example of an encoder using a dictionary associated with a signal.
FIG. 8 shows an example of a decoder using a dictionary associated with a signal.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

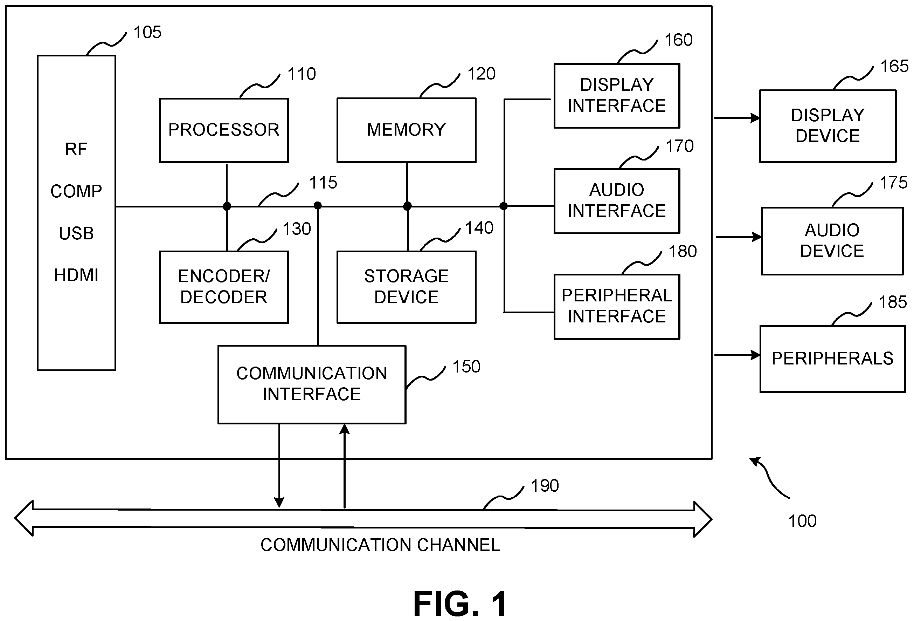

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

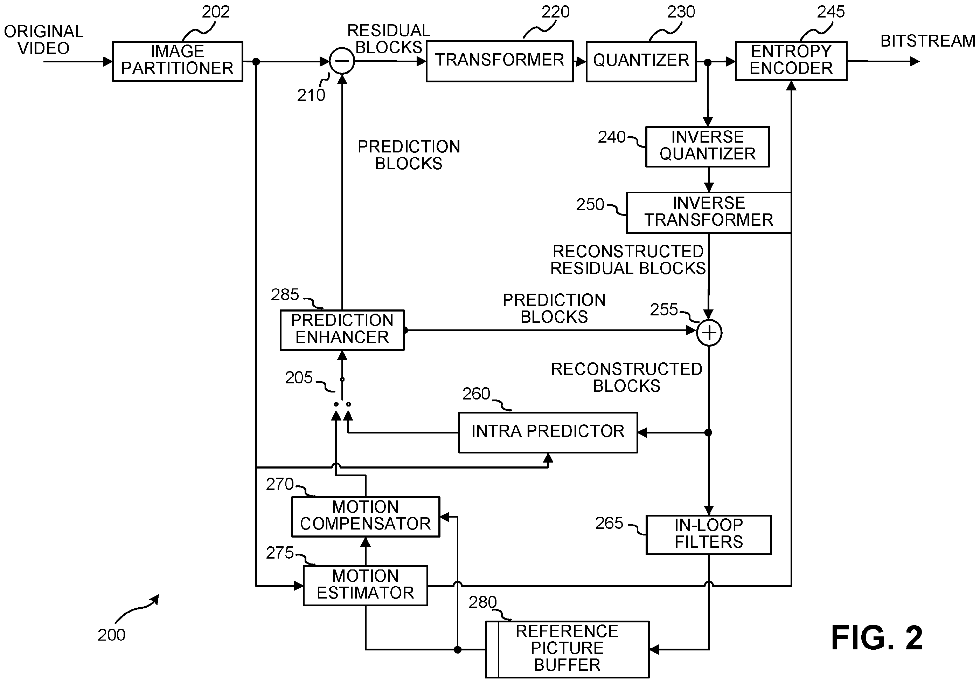

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

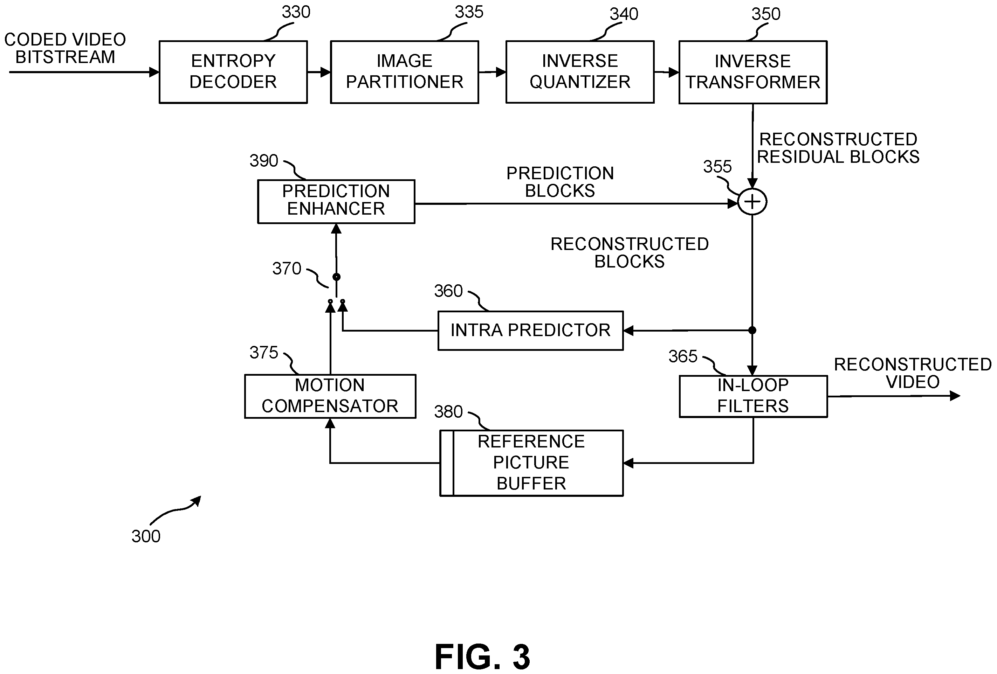

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C, Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. Video data (e.g., a bitstream) that may include one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

Systems, methods, and instrumentalities are disclosed herein for dictionary learning for implicit neural compression (INR).

In examples, a video decoder may decode an implicit neural representation (INR) parameter. An INR may be reconstructed based on the INR parameter. The decoder may compute a dictionary based on the reconstructed INR. A dictionary-based INR may be generated based on the computed dictionary. Data may be reconstructed based on the dictionary-based INR. In examples, the decoder may decoder a training procedure used for the computation of the dictionary. The dictionary may be computed based (e.g., further based) on the training procedure.

In examples, the decoder may obtain a first segment and a second segment. The INR parameter and the dictionary may be associated with the first segment. The decoder may decode a dictionary-based INR parameter. The dictionary-based INR parameter may be associated with the second segment and the dictionary-based INR may be generated based (e.g., further based) on the dictionary-based INR parameter.

In examples, the INR parameter may be a first INR parameter. A second INR parameter may be decoded. The second INR parameter may be associated with the first segment. The INR may be reconstructed based (e.g., further based) on the second INR parameter. In examples, the dictionary-based INR parameter may be a first dictionary-based INR parameter. A second dictionary-based INR parameter may be decoded. The second dictionary-based INR parameter may be associated with the second segment. The dictionary-based INR may be generated based (e.g., further based) on the second dictionary-based INR parameter.

In examples, the reconstructed INR may be a first reconstructed INR. The decoder may decode a partition for the first segment. The first segment may be partitioned into a first part and a second part using the decoded partition. The first reconstructed INR may be associated with the first part of the first segment. Based on the INR parameter, a second INR may be reconstructed. The second INR may be associated with the second part of the first segment. The dictionary may be computed based on (e.g., further based on) the reconstructed second INR. In examples, the dictionary-based INR may be a first dictionary-based INR. The decoder may decode a partition for the second segment. The second segment may be partitioned into a first part and a second part using the decoded partition. The first dictionary-based INR may be associated with the first part of the second segment. Based on the dictionary-based INR parameter, a second dictionary-based INR may be generated. The second dictionary-based INR may be associated with the second part of the second segment. Data may be reconstructed based on (e.g., further based on) the second dictionary-based INR.

In examples, a video encoder may determine an INR parameter. The dictionary may be computed based on the INR parameter (e.g., based on the INR associated with the INR parameter). The encoder may determine a dictionary-based INR parameter based on the computed dictionary. The INR parameter and the dictionary-based INR parameter may be encoded.

In examples, the encoder may obtain a first segment and a second segment. The INR parameter and the dictionary may be associated with the first segment. The dictionary-based INR parameter may be associated with the second segment. An INR associated with the first segment may be learned based on a loss function. A dictionary-based INR associated with the second segment may be learned based on the loss function. The INR parameter associated with the first segment may be based on the learned INR. The dictionary-based INR parameter associated with the second segment may be determined based on (e.g., further based on) the learned dictionary-based INR. The second segment may be encoded based on the dictionary-based INR.

In examples, the INR parameter may be a first INR parameter. The dictionary-based INR parameter may be a first dictionary-based INR parameter. A second parameter associated with the first segment may be determined. The dictionary may be computed based on (e.g., further based on) the second INR parameter. A second dictionary-based INR parameter associated with the second segment may be determined. The second INR parameter and the second dictionary-based INR parameter may be encoded.

In examples, the INR parameter may be a first INR parameter. The first segment may be partitioned into a first part and a second part. The first INR parameter may be associated with the first part of the first segment. A second INR parameter may be determined. The second INR parameter may be associated with the second part of the first segment. The dictionary may be computed based on (e.g., further based on) the second INR parameter.

In examples, the dictionary-based INR parameter may be a first dictionary-based INR parameter. A partition may be selected for the second segment. The partition may be selected based on the computed dictionary. The second segment may be partitioned into a first part and a second part. The first dictionary-based INR parameter may be associated with the first part of the second segment. A second dictionary-based INR parameter may be determined. The second dictionary-based INR parameter may be associated with the second part of the second segment.

The examples described here are in the field of learning-based compression, such as through implicit neural representations (INR) and generally relate to efficient cloud streaming, for example, in the context of two-dimensional signals and video compression.

To achieve high compression efficiency, image and video coding schemes may employ block-based prediction, including motion vector prediction, and transform to leverage spatial and temporal redundancy in the video content. Intra or inter prediction may be used to exploit the intra or inter frame correlation. The differences between the original block and the predicted block, often denoted as prediction errors or prediction residuals, may (e.g., may then) be transformed, quantized, and entropy coded. To reconstruct the video, the compressed data may be decoded by inverse processes corresponding to the entropy coding, quantization, transform, and prediction.

In examples, motion compensated temporal prediction may be employed to exploit the redundancy that exists between successive pictures of a video. Examples herein may be in the context of implicit neural representations, used for example, for video compression. In examples, 2D (two-dimensional) video compression may be used, but INR may be used for many other signals, in particular 3D (three-dimensional) scenes or objects. These examples may provide lower computational complexity than end-to-end neural compression approaches.

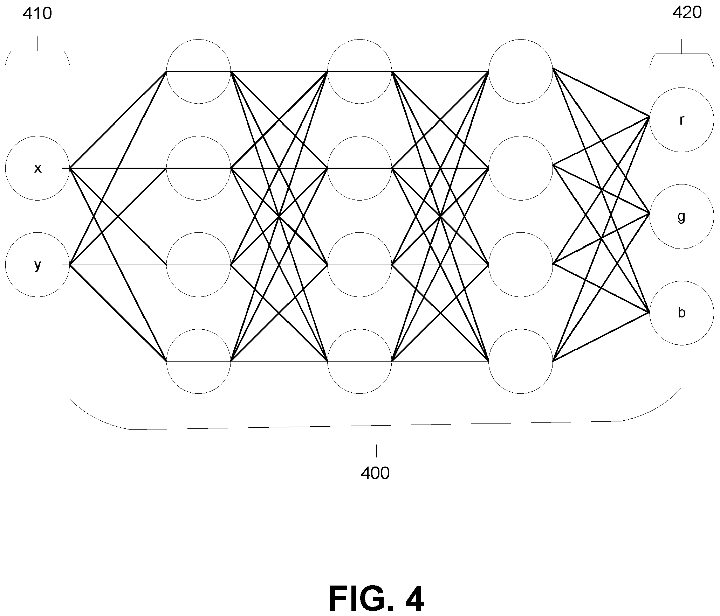

FIG. 4 shows a simple neural network used for implicit neural representation (INR). Such a neural network used for INR may be referred to as an INR network. INR may parameterize a signal as a function 400, which may take coordinates 410 as input and outputs values 420 of a signal at these coordinates. An INR may be applied to images, videos, or 3D objects among other applications. In the image case, the inputs 410 may be pixel coordinates $(x, y)$ and the INR may output 420 the color values $(r, g, b)$ or $(y, u, v)$ of the input pixel. The input coordinates may be modified by a transformation before being used as input for the neural network. This transformation may be a Fourier mapping, coordinate transformation, normalization, etc.

The INR may be used to reconstruct a signal by computing the signal values for every necessary coordinate input. The INR may be used to upsample a signal by generating output for input coordinates corresponding to the upsampled pixels, for example, the mean of the coordinates between two consecutive pixels for upsampling by a factor of 2.

An INR network 100 may be a neural network, which may be composed of multiple neural layers, such as fully connected layers. In FIG. 4, the network has four layers. Intermediate outputs may be represented by circles. Each neural layer may be described as a function that first multiplies the input by a tensor, adds a vector called the bias, and then applies a nonlinear function on the resulting values. The shape (e.g., and other characteristics) of the tensor and the type of non-linear functions may be called the architecture of the network. The values of the tensor and the bias may be denoted by the term weights. The weights and, if applicable, the parameters of the non-linear functions, may be called the parameters $\theta$ of

the network. The architecture and the parameters may define a "model". $f_\theta$ may be used to denote an INR function parameterized by $\theta$.

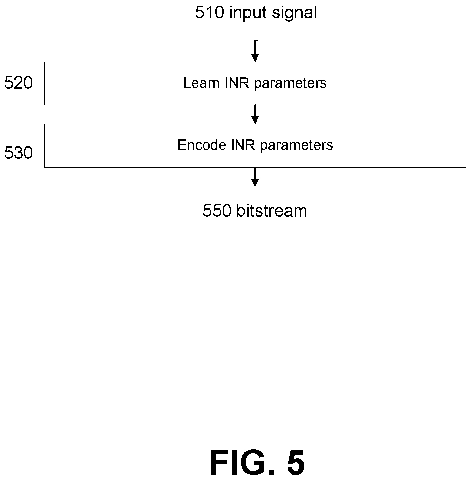

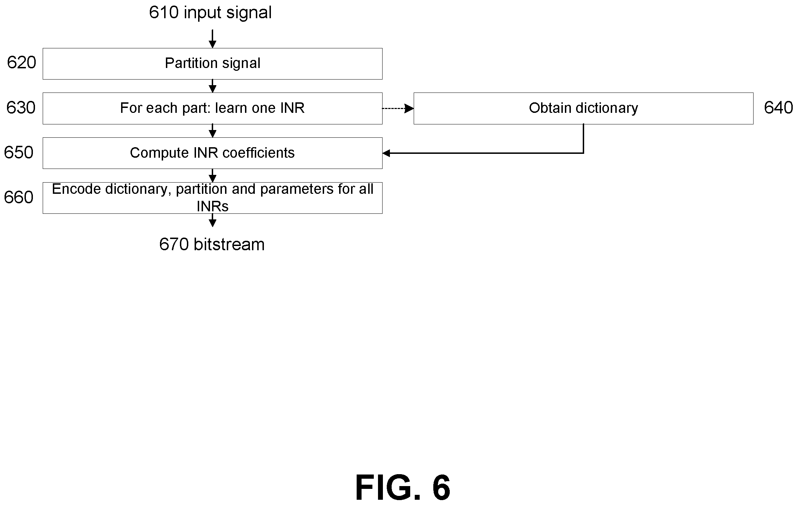

FIGs. 5-6 show processes to encode a signal using an INR. As shown in FIG. 5, the input signal at 510 may be encoded by optimizing the weights $\theta$ (e.g., or a subset of them) of the INR network to reconstruct the signal at 520 and encoding the signal at 530 to create the output bitstream 550. For an image $I$ of size $(M \times N)$, the weights $\theta$ may be optimized by minimizing the following loss function:

$$Loss = D(I, f_{\boldsymbol{\theta}}) + \lambda\, R(\theta)$$

$$D_{MSE} = \frac{1}{MN} \sum_{x,y} (I(x,y) - f_{\boldsymbol{\theta}}(x,y))^2 \quad,$$

$D$ may be a distortion which quantifies the difference between the reconstructed image by $f_\theta$ to the original image $I$. $R$ may be the bitrate of the encoded parameters and $\lambda$ a trade-off parameter between $D$ and $R$. $D$ may be any differentiable distortion measure, such as mean squared error as in the second equation. M and N may be the width and height of an image. Other metrics such as LPIPS (learned perceptual image patch similarity) may also be used in this case. The optimization of the weights $\theta$ may be performed by a machine learning approach such as a batch gradient descent method.

To decompress the signal, $f_\theta$ may be evaluated at all relevant coordinates. These coordinates may be selected at decoding (e.g., all pixel coordinates for an image or video). For example, for a 256x256 pixel image, these coordinates may be all pairs $(x,y)$ for all $x \in \{0,1, ...,255\}$ and $y \in \{0,1, ...,255\}$. Other choices are possible, for example to upsample, downsample or extend the original image.

In examples, a signal, or a part of a signal may be better encoded by approximating some parameters of the INR network using a dictionary approximation. By doing so, the INR network may be encoded by the weights of the non-approximated parts and some additional information that describes the approximated parts. An INR may be divided into head $h$ and tail $t$ layers, as $f_\theta = t_{\theta_t} h_{\theta_h}$, and approximate $\theta_\mathrm{h}$. This is an example of a decomposition into a composited representation, and other types of decompositions may be used without any loss of generality. For the approximation, a dictionary $D = [d_1, d_2, ... d_K]$ may be learned with K INR atoms so that each of the head layers may be approximated (e.g., represented) using a sparse linear combination of the atoms of the dictionary. That is,

$$\hat{\theta}_h = D\gamma \approx \theta_h$$

The sparse coefficients $\gamma$ may be approximated by optimizing the following loss function,

$$\arg\min_\gamma \|\theta_h - D\gamma\| + \alpha\, \|\gamma\|_1, \qquad (3)$$

$\theta_h$ may be the weights of the head layers, $D$ may be the learnt dictionary, and $\gamma$ may be the sparse coefficients to be optimized. To enforce the sparsity in the coefficient vector, the L1 norm may be used and a may be the trade-off between the two terms in the equation.

In examples, a signal or a part of a signal may be encoded by approximating some layers of the INR network using a dictionary approximation. This may allow encoding the INR network by the weights of the non-approximated parts and some additional information that describes the approximated parts. In examples, an INR may be divided into head $h$ and tail $t$ layers, as $f_\theta = t_{\theta_t} h_{\theta_h}$, and approximate $h_{\theta_h}$. This is an example of a decomposition into a composited representation, and other types of decompositions may be used without any loss of generality. For the approximation, one may learn a dictionary $D = [f_{d_1}, f_{d_2}, ... f_{d_k}]$ with k INR functions so that each head layer is approximated (e.g., represented) using a sparse linear combination of the atoms of the dictionary. That may be $\widehat{h_{\boldsymbol{\theta}_h}} = \sum_{j=1}^{j=k} \gamma_j f_{d_j} \approx h_{\boldsymbol{\theta}_h}$.

Such an approximation may be achieved by the man skilled in the art by the optimization of the following cost:

$$\arg\min_{\boldsymbol{\gamma}} \sum_{x \in B} \left| I(x) - t_{\boldsymbol{\theta}_t} \circ \sum_{i=1}^{i=k} \gamma_i f_{d_i}(x) \right|^2 + \beta |\gamma|_1$$

where *B* may be the spatial support of the INR approximation (e.g., all image, bloc, superpixel, etc). This optimization problem may (e.g., may also) be modified to optimize the dictionary *D* and/or the weights $\theta_t$. The optimization problem may (e.g., may also) include additional losses, such as a $l_1$ or $l_2$ losses on some or all the optimized parameters.

In examples, a signal specific dictionary may be used to encode a signal. This may apply to any of the any techniques described herein. In examples, the dictionary may be learned on the first frame of a temporal signal (e.g., such as a video), transmitted in the bitstream, and used by the decoder to decode the signal (e.g., as described herein).

In examples, a signal or a part of a signal may be encoded by approximating some layers of the INR network using a dictionary approximation. This may allow (e.g., may also allow) encoding the INR network by the weights of the non-approximated parts and some additional information that describes the approximated parts. In examples, the general/universal dictionary D may be learnt on the diverse large collection images/video frames or on the patches generated from diverse collection images/video frames. In examples a dictionary specific to each video that is to be encoded may be learned.

Part of a signal may be encoded by approximating parameters using a signal specific dictionary. Including this dictionary in the bitstream may lead to a significant transmission cost. Examples of using a signal specific dictionary for dictionary-based INR encoding, by allowing the decoder to re-compute a dictionary on a segment of the signal using the same procedure as the encoder, are provided herein. This may lead to a smaller bitstream as the dictionary may not be transmitted.

In examples, the video encoder and video decoder may use dictionaries associated with signals (e.g., video signals). The dictionaries may be signal specific but may not be transmitted. The video encoder or decoder may learn a dictionary on a segment (e.g., a first segment) of a signal (e.g., the same procedure may be used to learn the dictionary for the encoder and decoder). The same dictionary may be available at both the encoder and decoder. The signal may be a 2D video signal.

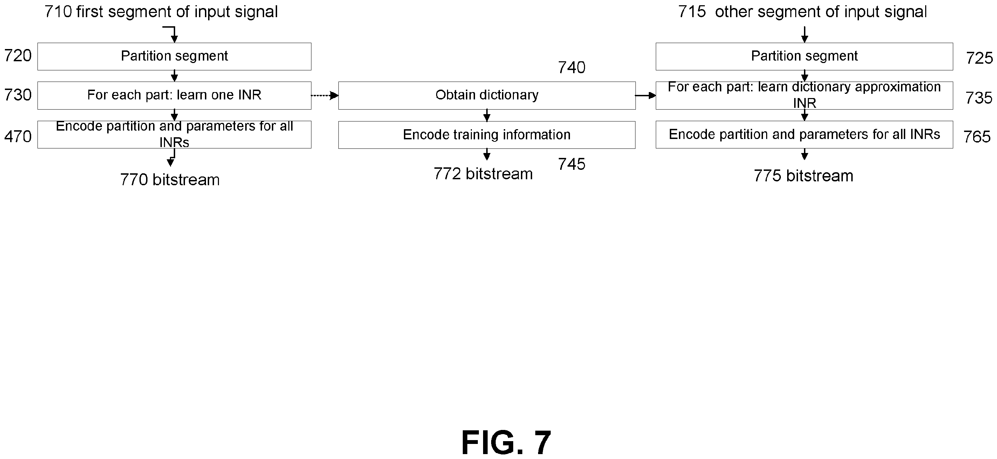

FIG. 7 shows an example of an encoder using a dictionary associated with a signal. The signal (e.g., video signal) may be divided into at least two segments (e.g., a first segment and a second segment). At 710, the encoder may obtain a first segment of the signal and at 715, the encoder may obtain other segments (e.g., a second segment) of the signal. At 720, the first segment may be partitioned into parts (e.g., coding units (CUs)). The first segment may be partitioned into a first part and a second part. The partitions may include a fixed-size window, quadtree, superpixels, binary-tree, ternary-tree partitioning, or multi-type tree partitioning. In examples, the segments may be partitioned using brute force. For brute force, all possible partitions may be considered. In examples, the segments may be partitioned using greedy search. For greedy search, an initial CU covering the entire signal may be incrementally divided by evaluating the impact of a CU split. The splitting may be done if the impact in terms of rate/distortion is positive. A CU may be split (e.g., split further) if encoding the CU is less advantageous in terms of rate distortion than encoding the CU's children. In examples, the segments may be partitioned without learning INR networks. For example, a brute force and/or a greedy search approach could optimize other characteristics of the CUs, such as pixel mean, variance, texture and/or any other statistics of the signal within the considered CUs. In examples, the segments may be partitioned using a segmentation algorithm that uses characteristics of the image. In examples, the segments may be partitioned by optimizing the partition for the quality of resulting dictionary in terms of distortion/bitrate (e.g., if encoding subsequent segments of the signal). When a partition is applied at 720, the type of partition used, the algorithm used to create them, and the parameters used to configure these two elements may be provided by the encoder. In examples, the partition may be included in the bitstream.

At 730, an INR may be learned (e.g., trained). The INR may be learned based on a loss function. The loss function may be based on determining reconstructed pixel values compared with original pixel values. The INR may be associated with the first segment. The INR may include head and tail layers, which may be learned for each partition of the first segment (e.g., may be learned for the first part and the second part of the first segment). When the INR(s) are learned at 730, a description of the architecture of the INRs and/or of the training or computing procedure used to train the INRs (e.g., the particular training algorithm used, the number of iterations, the type of optimizer (optimization algorithm) to use, the learning rate, whether said learning rate is adaptive, the type of adaptation, the initialization of the parameters (e.g., fixed value, random values and the seed, initialize from a known set of value), the type of the parameters (e.g., integer, float32, float64), the batch size, the ordering of the batches, the data points in the batches, etc.) may be provided by the encoder. In examples, at least one INR parameter may be determined based on the learned INR. The INR parameter(s) may be parameter vectors $\theta_h^i$ and $\theta_t^i$. In examples, a first INR parameter may be $\theta_h^i$ or $\theta_t^i$ and a second INR parameter may be $\theta_h^i$ or $\theta_t^i$. The first INR parameter may be associated with the first part of the first segment and the second INR parameter may be associated with the second part of the first segment.

At 760, the first segment may be encoded. The INR parameter(s) may be encoded (e.g., the first INR parameter associated with the first part of the first segment and the second INR parameter associated with the second part of the first segment may be encoded). At 770, the INR parameter(s) (e.g., $\theta_h^i$ and $\theta_t^i$) may be encoded in video data (e.g., a bitstream for transmission or for later use). This may involve the use of entropy coders and/or quantization. The INR parameters may be encoded using any encoding technique. The encoder may choose the encoding technique. The chosen technique may be included in the bitstream and may be entropy coded.

At 740, a dictionary may be computed (e.g., trained) based on the INR parameter(s) (e.g., based on the INR determined in 730 associated with the INR parameter(s)). The dictionary may be associated with the first segment and may be computed on the first segment of the signal. The encoder may consider dictionary characteristics when computing the dictionary. The dictionary characteristics may be dictionary approximation, the number of dictionary elements k, or the form of the functions $f_{d_1}$, $f_{d_2}$, ... $f_{d_k}$.

A training procedure (e.g., such as those described herein) may be used to train or compute the dictionary. The training procedure may be selected from a number of training procedures. The selected training procedure may use the INR parameter(s) to compute the dictionary. The selected training procedure may include at least one of: the particular computing or training algorithm used; the number of iterations; the type of optimization algorithm to use; the learning rate; whether the learning rate is adaptative and the type of adaptation; the initialization of the parameters (e.g., fixed value, random values and the seed, initialize from a known set of values...); the type of the parameters (e.g., integer, float32, float64...); the batch size; the ordering of the batches; or the data points in the batches. The encoder may select one a training procedure for the dictionary by trying several procedures and keeping the best ones. The encoder may use machine learning or reinforcement learning, including those designed to search hyperparameter spaces and models predicting the best configuration based on the characteristics of the first segment of the signal or the characteristics of the INR models.

At 745, the selected training procedure used for the computation of the dictionary may be encoded. At 772, the description of the dictionary characteristics and of the dictionary characteristics may be included in the bitstream. The pieces of information describing the training or computation procedure for the dictionary may be compressed.

As shown, at 725, a partition associated with the second segment may be selected. The selected partition may be used to partition the second segment into parts (e.g., coding units (CUs)). In examples, the second segment may be partitioned into a first part and a second part. In examples, the partition may be optimized and selected based on the computed dictionary. The encoder may select the partition (e.g., such that it results in the best rate/distortion tradeoff if encoding the second segment using dictionary approximation).

At 735, a dictionary-based INR may be learned (e.g., trained). The dictionary-based INR may be learned based on a loss function. The loss function may be based on determining reconstructed pixel values compared with original pixel values. The dictionary-based INR may be associated with the second segment. In examples, at least one dictionary-based INR parameter may be determined based on the learned dictionary-based INR and/or based on the computed dictionary.

In examples, the dictionary-based INR parameter(s) may include parameters $\gamma^i$ and $\theta_t^i$. In examples, a first dictionary-based INR parameter may be $\gamma^i$ or $\theta_t^i$ and a second dictionary-based INR parameter may be $\gamma^i$ or $\theta_t^i$. The first dictionary-based INR parameter may be associated with the first part of the second segment and the second dictionary-based INR parameter may be associated with the second part of the second segment.

In examples, an INR model may first be trained to encode a part of the second segment. Then, some parameters vectors of this INR model (e.g. $\theta_h^i$) may be approximated based on the dictionary D (e.g. by computing some parameters $\gamma^i$). This may result in a dictionary-based INR model that is encoded more efficiently. This approximation may be computed with a number of techniques, including techniques that may be used to compute the approximation with the original dictionary. For example, using a parameter-level approximation, an INR composed of head and tail layers may be trained for each of the first and second parts of the second segments, which may produce INR model parameter $\theta_h^i$ and $\theta_t^i$ for each part of the second segment. The optimization problem may (e.g., may then) be solved to approximate each INR model parameter vector $\theta_h^i : \gamma^i = \arg\min_{\gamma} \lVert \theta_h^i - D\gamma \rVert + \alpha \lVert \gamma \rVert_1$. In examples, some or all the INR model parameters $\theta_t^i$, that are not approximated by the dictionary but are also present in the dictionary-based INR model, may be fine-tuned (e.g., as well). This fine-tuning may be done jointly with the dictionary-based INR model parameters $\gamma^i$ or separately. It may (e.g., may also) be an iterative process. In examples, the dictionary-based INR parameters $\theta_t^i$ and $\gamma^i$ may be trained directly together by minimizing the following loss:

$$\theta_t^i, \gamma^i \;=\; \arg\min_{\theta_t^i, \gamma^i} \sum_{x \in c_i} \left| I(x) - t_{\theta_t^i} \circ h_{D\gamma^i}(x) \right|^2 + \alpha \left| \gamma_{\square}^i \right|_1 + \lambda R(\theta_t^i).$$

In examples, a term (e.g., an additional term

$$R(\gamma_{\square}^{i})$$

may be used in the loss to account for the rate of the dictionary-based INR model parameter

$$\gamma_{\square}^{i}$$

in addition to or instead of

$$\alpha\left|\gamma_{\square}^{i}\right|_{1}.$$

In examples, if using a function-level approximation, an INR composed of head and tail layers may be trained for the first part and the second part of the second segment, may include INR model parameter vectors $\theta_h^i$ and $\theta_t^i$ for each of the first part and the second part of the second segment. The following optimization problem may (e.g., may then) be solved to approximate each head function $h_{\theta_h^i}$: $arg\min_{\gamma^i}\sum_{x\in B}\left|I(x)-t_{\theta_t^i}\circ\sum_{j=1}^{j=k}\gamma_j^i f_{d_j}(x)\right|^2+\beta\left|\gamma^i\right|_1$. In examples, the dictionary-INR parameters may be trained directly together by minimizing the following loss:

$$arg\min_{\boldsymbol{\theta}_t^i,\boldsymbol{\gamma}^i}\sum_{x\in B}\left|I(x)-t_{\boldsymbol{\theta}_t^i}\circ\sum_{j=1}^{j=k}\boldsymbol{\gamma}_j^i f_{d_j}(x)\right|^2+\beta\left|\boldsymbol{\gamma}^i\right|_1+\lambda\boldsymbol{R}(\theta_t^i)$$ to obtain dictionary-based INR model para-

meters $\boldsymbol{\theta}_t^i,\boldsymbol{\gamma}^i$.

At 765, the second segment may be encoded (e.g., based on the dictionary-based INR). The dictionary-based INR parameter(s) may be encoded (e.g., the first dictionary-based INR parameter associated with the first part of the second segment and the second dictionary-based INR parameter associated with the second part of the second segment may be encoded). At 775, the dictionary-based INR parameter(s) (e.g., $\gamma^i$ and $\theta_t^i$) may be encoded in video data (e.g., a bitstream for transmission or for later use). This may involve the use of entropy coders and/or quantization. The dictionary-based INR parameters may be encoded using any technique. The dictionary updates $\Delta$ may be encoded using special features designed to encode updates. The encoding techniques of these parameters may be used by both the encoder and decoder. The encoder may (e.g., may also) choose the encoding technique. The chosen technique may be included in the bitstream and may be entropy coded.

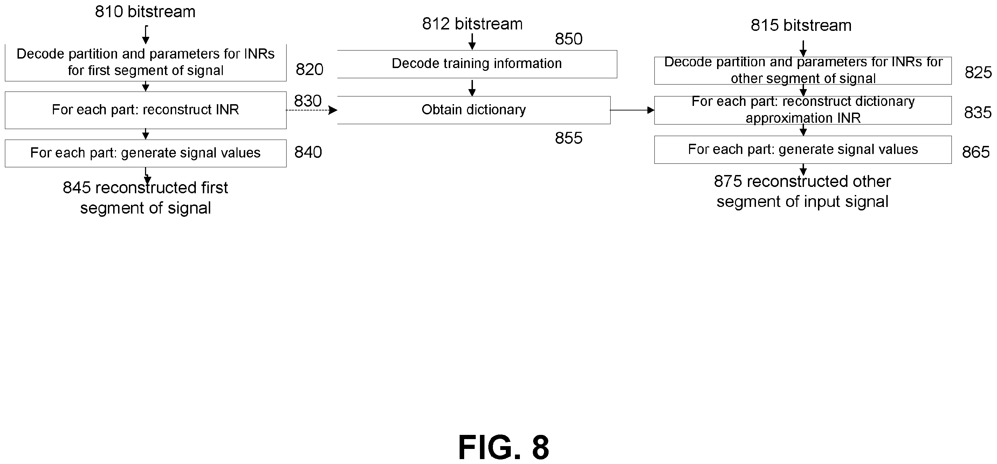

FIG. 8 shows an example of a decoder using a dictionary associated with a signal (e.g., a video). The signal (e.g., video signal) may be divided into at least two segments (e.g., a first segment and a second segment). The decoder may obtain a first segment of the signal and may obtain other segments (e.g., a second segment) of the signal. The decoder may decode the first segment of the signal. At 810, at least one INR parameter may be included in video data (e.g., the bitstream). At 820, the at least one INR parameter(s) may be decoded. The INR parameter(s) may be parameter vectors $\theta_h^i$ and $\theta_t^i$. In examples, a first INR parameter may be $\theta_h^i$ or $\theta_t^i$ and a second INR parameter may be $\theta_h^i$ or $\theta_t^i$. In examples, the INR parameter(s) may be associated with the first segment.

At 830, at least one INR may be reconstructed based on at least one of the INR parameter(s) (e.g., $\theta_h^i$ and/or $\theta_t^i$). In examples, a partition may be decoded or recomputed if a partition is used. This may involve the use of dequantization and/or an entropy coder. The first segment may be partitioned into a first part and a second part using the decoded partition. In examples, a first reconstructed INR may be associated with the first part of the first segment and a second reconstructed INR may be associated with the second part of the first segment.

At 840, data (e.g., signal data) associated with the first segment may be reconstructed based on at least one of the reconstructed INRs (e.g., the first reconstructed INR and/or the second reconstructed INR). Data associated with the first segment may be reconstructed from the INR network using at least one of the INR parameter(s) (e.g., $\theta_h^i$ and/or $\theta_t^i$). An inference may be performed using the INR network with the coordinates in the corresponding partition (e.g., as described above). At 845, the decoder may reconstruct the first segment of the signal.

At 850, the decoder may decode a dictionary computation or a training procedure (e.g., used for computation of a dictionary) from the bitstream. The description of the dictionary characteristics and/or of the training or computing procedure used to obtain the dictionary may be decoded from the bitstream at 812. This may involve the use of dequantization and/or an entropy coder. Examples of the dictionary characteristics and/or the training or computing procedures used to obtain the dictionary may include at least one of the type of dictionary approximation, the number of dictionary elements k or, the form of the functions $f_{d_1}$, $f_{d_2}$, ... $f_{d_k}$, the particular training algorithm used, the number of iterations, the type of optimize to use, the learning rate, whether said learning rate is adaptive, the type of adaptation, the initialization of the parameters (e.g., fixed value, random values and the seed, initialize from a known set of values), the type of the parameters (integer, float32, float6), the batch size, the ordering of the batches, or the data points in the batches).

At 855, the dictionary may be obtained. The dictionary may be associated with the first segment of the signal. The dictionary D may be computed or trained based on the at least one of the reconstructed INRs (e.g., the first reconstructed INR and/or the second reconstructed INR). The dictionary D may be computed (e.g., further computed) using the description of the dictionary characteristics and/or the training or computing procedure used to obtain the dictionary (e.g., decoded from the bitstream at 812). This may reproduce the same procedure as the one selected in the used at 840 by the encoder (e.g., as described above) to obtain the same dictionary.

The decoder may decode the second segment of the signal. At 815, at least one dictionary-based INR parameter may be included in the bitstream. At 825, the at least one dictionary-based INR parameter(s) may be decoded. The dictionary-based INR parameters may be $\gamma^i$ and $\theta_t^i$. In examples, a first dictionary-based INR parameter may be $\gamma^i$ and $\theta_t^i$ and a second dictionary-based INR parameter may be $\gamma^i$ and $\theta_t^i$. In examples, the dictionary-based INR parameter(s) may be associated with the second segment.

At 835, at least one dictionary-based INR(s) may be generated (e.g., reconstructed) based on at least one of the dictionary-based INR parameter(s) (e.g., $\gamma^i$ and/or $\theta_t^i$). The at least one dictionary-based INR(s) may be generated (e.g., reconstructed) based (e.g., further based) on the computed dictionary. In examples, a partition may be decoded or recomputed if a partition is used. This may involve the use of dequantization and/or an entropy coder. The second segment may be partitioned into a first part and a second part using the decoded partition. In examples, a first reconstructed dictionary-based INR may be associated with the first part of the second segment and a second reconstructed dictionary-based INR may be associated with the second part of the second segment.

In examples, at least one dictionary-based INR(s) may be reconstructed using a parameter-level approximation. An INR composed of head and tail layers may be reconstructed for the first part and the second part of the second segment. The tails parameters $\theta_t^i$ may be used as decoded from the bitstream and the head parameters $\theta_h^i$ may be obtained using a sparse linear combination of the atoms of the dictionary D. The weights of the linear combination may be coefficients $\gamma^i$ decoded at 825. The parameters $\theta_h^i$ may be reconstructed as a linear combination of the atoms of the dictionary D (e.g., as $\theta_h^i \approx DQ^{-1}(\hat{\gamma}^i_{\square})$ (e.g., in case the coefficients were quantized to values $\hat{\gamma}^i$) or $\theta_h^i \approx D\gamma^i_{\square}$ if the coefficients $\gamma^i_{\square}$ were directly encoded in the bitstream)). In examples, if using function-level approximation, the dictionary may include k INR functions, so that a head layer (e.g., each head layer) may be approximated (e.g., represented) using a sparse linear combination of the INR functions of the dictionary:

$$\widehat{h_{\theta_h^i}} = \sum_{j=1}^{j=k} \gamma_j^i f_{d_j} \approx h_{\theta_h^i}$$

At 865, data (e.g., signal data) associated with the second segment may be reconstructed based on at least one of the dictionary-based INRs (e.g., the first dictionary-based INR and/or the second dictionary-based INR). Data associated with the second segment may be reconstructed from the INR network using at least one of the dictionary-based INR parameters (e.g., $\gamma^i$ and/or $\theta_t^i$). An inference may be performed using the INR network with the coordinates in the corresponding partition (e.g., as described above). At 875, the decoder may reconstruct the second segment of the signal.

In examples, multiple segments of the signal (e.g., video signal) may be used to learn the dictionary. For example, the first frame may be used to train the dictionary. For example, the first 5 frames may be used to train the dictionary. In examples, frames 1 and 16 may be used. In examples, the first segment of the signal may be encoded/decoded using any approach. The INR used in 730 and 830 may be computed both in the encoder and the decoder. This means that the encoder may include (e.g., in the bitstream) a description of the procedure used by the encoder (e.g., to train/learn the INR), so that the decoder may reproduce it exactly.

In examples, if encoding the other segment (e.g., second segment), the encoder may compute and encode an update to the dictionary. This may achieve a better rate/distortion trade-off. In examples, the dictionary may be updated by recomputing it from one or multiple signal segments encoded/decoded by the encoder/decoder. This may be done in the same way as learning the dictionary on the first segment. In examples, the computation may depend on the original value of the dictionary.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoding device, comprising:
   a processor configured to:

   decode an implicit neural representation (INR) parameter;
   reconstruct an INR based on the INR parameter;
   compute a dictionary based on the reconstructed INR;
   generate a dictionary-based INR based on the computed dictionary; and
   reconstruct data based on the dictionary-based INR.

2. A video decoding method, the method comprising:

   decoding an implicit neural representation (INR) parameter;
   reconstructing an INR based on the INR parameter;
   computing a dictionary based on the reconstructed INR;
   generating a dictionary-based INR based on the computed dictionary; and
   reconstructing data based on the dictionary-based INR.

3. The video decoding device of claim 1 or the video decoding method of claim 2, wherein the processor of claim 1 is further configured to perform, or the method of claim 2 further comprises:
   decoding a training procedure used for the computation of the dictionary, wherein the dictionary is computed based on the reconstructed INR using the training procedure.

4. The video decoding device of any of claims 1 and 3 or the video decoding method of any of claims 2 to 3, wherein the processor of any of claims 1 and 3 is further configured to perform, or the method of any of claims 2 to 3 further comprises:

   obtaining a first segment and a second segment of video data, wherein the INR parameter and the dictionary are associated with the first segment; and
   decoding a dictionary-based INR parameter associated with the second segment, wherein the dictionary-based INR is generated based on the dictionary-based INR parameter and the computed dictionary.

5. The video decoding device of any of claims 1 and 3 to 4 or the video decoding method of any of claims 2 to 4, wherein the INR parameter is a first INR parameter, and wherein the processor of any of claims 1 and 3 to 4 is further configured to perform, or the method of any of claims 2 to 4 further comprises:
   decoding a second INR parameter associated with the first segment, wherein the INR is reconstructed further based on the second INR parameter.

6. The video decoding device of any of claims 1 and 3 to 5 or the video decoding method of any of claims 2 to 5, wherein the dictionary-based INR parameter is a first dictionary-based INR parameter, and wherein the processor of any of claims 1 and 3 to 5 is further configured to perform, or the method of any of claims 2 to 5 further comprises:
   decoding a second dictionary-based INR parameter associated with the second segment, wherein the dictionary-based INR is generated based on the computed dictionary, the first dictionary-based INR parameter and the second dictionary-based INR parameter.

7. The video decoding device of any of claims 1 and 3 to 6 or the video decoding method of any of claims 2 to 6, wherein the reconstructed INR is a first reconstructed INR, and wherein the processor of any of claims 1 and 3 to 6 is further configured to perform, or the method of any of claims 2 to 6 further comprises:

decoding a partition for the first segment;
partitioning the first segment into a first part and a second part using the decoded partition, wherein the first reconstructed INR is associated with the first part of the first segment; and
based on the INR parameter, reconstructing a second INR associated with the second part of the first segment, wherein the dictionary is computed further based on the reconstructed second INR.

8. The video decoding device of any of claims 1 and 3 to 7 or the video decoding method of any of claims 2 to 7, wherein the dictionary-based INR is a first dictionary-based INR, and wherein the processor of any of claims 1 and 3 to 7 is further configured to perform, or the method of any of claims 2 to 7 further comprises:

decoding a partition for the second segment;
partitioning the second segment into a first part and a second part using the decoded partition, wherein the first dictionary-based INR is associated with the first part of the second segment;
based on the dictionary-based INR parameter, generating a second dictionary-based INR associated with the second part of the second segment; and
reconstructing data further based on the second dictionary-based INR.

9. A video encoding device, comprising:
a processor configured to:

determine an implicit neural representation (INR) parameter;
compute a dictionary based on the INR parameter;
determine a dictionary-based INR parameter based on the computed dictionary; and
encode the INR parameter and the dictionary-based INR parameter.

10. A video encoding method, the method comprising:

determining an implicit neural representation (INR) parameter;
computing a dictionary based on the INR parameter;
determining a dictionary-based INR parameter based on the computed dictionary; and
encoding the INR parameter and the dictionary-based INR parameter.

11. The video encoding device of claim 9 or the video encoding method of claim 10, wherein the processor of claim 9 is further configured to perform, or the method of claim 10 further comprises:
obtaining a first segment and a second segment, wherein the INR parameter and the dictionary are associated with the first segment, and the dictionary-based INR parameter is associated with the second segment.

12. The video encoding device of any of claims 9 and 11 or the video encoding method of any of claims 10 to 11, wherein the processor of any of claims 9 and 11 is further configured to perform, or the method of any of claims 10 to 11 further comprises:

learning an INR associated with the first segment based on a loss function and learn a dictionary-based INR associated with the second segment based on the loss function, wherein the INR parameter associated with the first segment is based on the learned INR, and wherein the dictionary-based INR parameter associated with the second segment is determined further based on the learned dictionary-based INR; and
encoding the second segment based on the dictionary-based INR.

13. The video encoding device of any of claims 9 and 11 to 12 or the video encoding method of any of claims 10 to 12, wherein the INR parameter is a first INR parameter, the dictionary-based INR parameter is a first dictionary-based INR parameter, and the processor of any of claims 9 and 11 to 12 is further configured to perform, or the method of any of claims 10 to 12 further comprises:

determining a second INR parameter associated with the first segment, wherein the dictionary is computed further based on the second INR parameter;

determining a second dictionary-based INR parameter associated with the second segment; and
encoding the second INR parameter associated with the first segment and the second dictionary-based INR parameter associated with the second segment.

14. The video encoding device of any of claims 9 and 11 to 13 or the video encoding method of any of claims 10 to 13, wherein the INR parameter is a first INR parameter, and wherein the processor of any of claims 9 and 11 to 13 is further configured to perform, or the method of any of claims 10 to 13 further comprises:

partitioning the first segment into a first part and a second part, wherein the first INR parameter is associated with the first part of the first segment;
determining a second INR parameter associated with the second part of the first segment, wherein the dictionary is computed further based on the second INR parameter; and
encoding the second INR parameter associated with the second part of the first segment.

15. The video encoding device of any of claims 9 and 11 to 14 or the video encoding method of any of claims 10 to 14, wherein the dictionary-based INR parameter is a first dictionary-based INR parameter, and wherein the processor of any of claims 9 and 11 to 14 is further configured to perform, or the method of any of claims 10 to 14 further comprises:

selecting a partition for the second segment, wherein the partition is selected based on the computed dictionary;
partitioning the second segment into a first part and a second part using the selected partition, wherein the first dictionary-based INR parameter is associated with the first part of the second segment;
determining a second dictionary-based INR parameter associated with the second part of the second segment; and
encoding the second dictionary-based INR parameter associated with the second part of the second segment.

**FIG. 1**

EP 4 730 264 A1

**FIG. 2**

**FIG. 3**

FIG. 4

510 input signal

| |
|---|
| 520 | Learn INR parameters |

| |
|---|
| 530 | Encode INR parameters |

550 bitstream

# FIG. 5

EP 4 730 264 A1

610 input signal

| 620 | Partition signal |
|---|---|

| 630 | For each part: learn one INR | ┄┄> | Obtain dictionary | 640 |

| 650 | Compute INR coefficients |
|---|---|

| 660 | Encode dictionary, partition and parameters for all INRs |
|---|---|

670 bitstream

# FIG. 6

EP 4 730 264 A1

710 first segment of input signal

715  other segment of input signal

| 720 | Partition segment |
| --- | --- |

| Partition segment | 725 |
| --- | --- |

740

| 730 | For each part: learn one INR |
| --- | --- |

| Obtain dictionary |
| --- |

| For each part: learn dictionary approximation INR | 735 |
| --- | --- |

| 470 | Encode partition and parameters for all INRs |
| --- | --- |

| Encode training information |
| --- |

| Encode partition and parameters for all INRs | 765 |
| --- | --- |

770 bitstream

772 bitstream    745

775 bitstream

# FIG. 7

**810 bitstream**

| Decode partition and parameters for INRs for first segment of signal | 820 |

| For each part: reconstruct INR | 830 |

| For each part: generate signal values | 840 |

**845 reconstructed first segment of signal**

**812 bitstream** 850

| Decode training information |

| Obtain dictionary |

855

**815 bitstream**

| Decode partition and parameters for INRs for other segment of signal | 825 |

| For each part: reconstruct dictionary approximation INR | 835 |

| For each part: generate signal values | 865 |

**875 reconstructed other segment of input signal**

# FIG. 8

| | Europäisches Patentamt European Patent Office Office européen des brevets | **EUROPEAN SEARCH REPORT** | **Application Number** EP 24 30 6763 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/078892 A1 (INTERDIGITAL CE PATENT HOLDINGS SAS [FR]) 18 April 2024 (2024-04-18) * page 6 - page 13; figures 4,15-17 * ----- | 1-15 | INV. G06T9/00 H04N19/90 |
| A | PEIHAO WANG ET AL: "Neural Implicit Dictionary via Mixture-of-Expert Training", ARXIV.ORG, CORNELL UNIVERSITY LIBRARY, 201 OLIN LIBRARY CORNELL UNIVERSITY ITHACA, NY 14853, 8 July 2022 (2022-07-08), XP091265963, * abstract; figure 1 * ----- | 1-15 | |
| A | WO 2024/184044 A1 (INTERDIGITAL CE PATENT HOLDINGS SAS [FR]) 12 September 2024 (2024-09-12) * paragraph [0003] - paragraph [0008]; figures 4-9 * ----- | 1-15 | |
| | | | TECHNICAL FIELDS SEARCHED (IPC) G06T H04N |

The present search report has been drawn up for all claims

| Place of search | Date of completion of the search | Examiner |
|---|---|---|
| Munich | 20 March 2025 | Kopilovic, Ivan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6763

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| WO 2024078892 A1 | 18-04-2024 | NONE | |
| WO 2024184044 A1 | 12-09-2024 | NONE | |

EPO FORM P0459